# EUROPÄISCHE PATENTSCHRIFT

(11) **EP 1 261 524 B1**
(45) Veröffentlichungstag und Bekanntmachung des Hinweises auf die Patenterteilung: **09.01.2013**
(21) Anmeldenummer: 01925332.7
(22) Anmeldetag: 17.02.2001
(51) Int. Cl.: B05D 7/16, B05D 7/00

(54) **VERFAHREN ZUR HERSTELLUNG VON MEHRSCHICHTLACKIERUNGEN AUF ELEKTRISCH LEITFÄHIGEN SUBSTRATEN**
METHOD FOR PRODUCING MULTILAYER PAINT COATINGS ON ELECTRICALLY CONDUCTIVE SUBSTRATES
PROCEDE POUR EFFECTUER DES MISES EN PEINTURE MULTICOUCHE SUR DES SUBSTRATS ELECTROCONDUCTEURS

(30) Priorität: 01.03.2000 DE 10009913
(43) Veröffentlichungstag der Anmeldung: 04.12.2002
(73) Patentinhaber: BASF Coatings GmbH, 48165 Münster (DE)
(72) Erfinder: BREMSER, Wolfgang, 48165 Münster (DE); GROSSE-BRINKHAUS, Karl-Heinz, 48301 Nottuln (DE); WEGNER, Egon, 48268 Greven (DE)
(74) Vertreter: Leifert & Steffan
(86) Internationale Anmeldenummer: PCT/EP2001/001769
(87) Internationale Veröffentlichungsnummer: WO 2001/064523

(56) Entgegenhaltungen:
- WO-A-86/03791
- WO-A-98/07794
- DE-A- 19 930 060
- US-A- 4 031 050
- US-A- 4 375 498

## Beschreibung

Die vorliegende Erfindung betrifft ein neues Naß-in-naß-Verfahren zur Herstellung von Mehrschichtlackierungen auf elektrisch leitfähigen Substraten.

Naß-in-naß-Verfahren zur Herstellung von Mehrschichtlackierungen auf elektrisch leitfähigen Substraten, bei denen man
(I) auf einem elektrisch leitfähigen Substrat einen kathodisch abscheidbaren Elektrotauchlack abscheidet,
(II) auf die resultierende Elektrotauchlackschicht mindestens einen Beschichtungsstoff appliziert, wonach man
(III) die Elektrotauchlackschicht und die mindestens eine Schicht aus dem Beschichtungsstoff gemeinsam härtet,
sind bekannt.

So beschreibt die japanische Patentanmeldung 1975-142501 (japanische Offenlegungsschrift JP 52-065534 A 2, Chemical Abstracts Referat Nr. 87: 137427) ein Naß-in-naß-Verfahren, bei dem ein Elektrotauchlack mit einem Epoxid-Aminaddukt als Bindemittel und einem blockierten Polyisocyanat als Vernetzungsmittel sowie ein wäßrige Beschichtungsstoff mit einem neutralisierten Polyester als Bindemittel, einem Melaminharz als Vernetzungsmittel und Pigmenten verwendet werden.

Aus der amerikanischen Patentschrift US 4,375,498 A 1 ist ein Naß-in-naß-Verfahren bekannt, bei dem ein Elektrotauchlack der vorstehend beschriebenen Art und wäßrige oder konventionelle Beschichtungsstoffe auf der Basis von Harzen, die Epoxidgruppen enthalten, verwendet werden.

Die amerikanische Patentschrift US 4,537,926 A 1 beschreibt ein Naß-in-naß-Verfahren, bei dem nicht näher spezifizierte kathodische Elektrotauchlacke mit einem Beschichtungsstoff überschichtet werden, der spezielle Latices als Bindemittel enthält.

Aus der amerikanischen Patentschrift US 4,761,212 A 1 geht ein Naß-in-naß-Verfahren hervor, bei dem ein kathodischer Elektrotauchlack verwendet wird, der mit Polyisocyanaten vernetzt werden kann. Der Elektrotauchlack selbst enthält jedoch keine Verbindungen dieser Art. Die Elektrotauchlackschicht wird mit einem Zweikomponentensystem aus einem isocyanatreaktiven Bindemittel und Polyisocyanaten überschichtet. Ein Teil der Polyisocyanate diffundiert dann in die Elektrotauchlackschicht und vernetzt diese.

Aus der europäischen Patentschrift EP 0 529 335 A 1 oder der deutschen Patentschrift DE 41 25 459 A 1 ist ein Naß-in-naß-Verfahren bekannt, bei dem ein kathodischer Elektrotauchlack auf Basis von Epoxid-Aminaddukten und blockierten Polyisocyanaten sowie ein wäßriger Beschichtungsstoff auf Basis eines wasserverdünnbaren Bindemittels und eines Melaminharzes, der Polyamid- oder Polyacrylnitrilpulver enthält, verwendet werden.

In der europäischen Patentschrift EP 0 595 186 A 1 oder der deutschen Patentanmeldung DE 42 35 778 A 1 wird ein naß-in-naß Verfahren beschrieben, bei dem übliche und bekannte kathodische Elektrotauchlacke und wäßrige Beschichtungsstoffe, die beim Härten unter Bildung von Urethangruppen vernetzen, verwendet werden. Hierbei müssen jedoch spezifische Pigment/Bindemittel-Verhältnisse angewandt werden, und die Einbrenntemperatur des Beschichtungsstoffs muß höher sein als die des Elektrotauchlacks.

Ein vergleichbares Naß-in-naß-Verfahren, bei dem anstelle des wäßrigen Beschichtungsstoffs ein pulverförmiger Beschichtungsstoff verwendet wird, ist aus der europäischen Patentschrift EP 0 646 420 A 1 bekannt. Auch bei diesem Verfahren müssen die Einbrenntemperaturen des Elektrotauchlacks und des pulverförmigen Beschichtungsstoffs genau aufeinander abgestimmt werden.

Noch ein weiteres Naß-in-naß-Verfahren, bei dem ein kathodischer Elektrotauchlack und ein wäßriger Beschichtungsstoff verwendet werden, ist aus der europäischen Patentschrift EP 0 639 660 A 1 bekannt.

Die europäische Patentschrift EP 0 817 648 A 1 oder die deutsche Patentschrift DE 195 12 017 C1 beschreiben ein Naß-in-naß-Verfahren, bei dem in einer ersten Stufe ein kathodischer Elektrotauchlack und ein farb- und/oder effektgebender Beschichtungsstoff appliziert und gemeinsam eingebrannt werden, wonach in einer zweiten Stufe ein weiterer farb- und/oder effektgebender Beschichtungsstoff und ein pigmentfreier Beschichtungsstoff appliziert und ebenfalls gemeinsam eingebrannt werden. Dabei dürfen die beiden farb- und/oder effektgebenden Beschichtungen eine gewisse Gesamtschichtdicke nicht unter- und nicht überschreiten, und die Schichtdicke der ersten farb- und/oder effektgebenden Beschichtung muß 20 bis 50% der Gesamttrockenschichtdicke der beiden farb- und/oder effektgebenden Beschichtungen betragen.

Nachteilig für all diese Verfahren ist, daß die kathodischen Elektrotauchlacke beim Härten schrumpfen, wodurch sich die Rauhigkeit der darunter liegenden elektrisch leitfähigen Substratoberfläche in der Elektrotauchlackierung abbildet. In der europäischen Patentschrift EP 0 192 113 A 2 wird daher ein kathodischer Elektrotauchlack vorgeschlagen, der beim Härten nur noch einen geringen Schrumpf aufweist. Dies wird durch die Verwendung von blockierten Polyisocyanaten erreicht, die mit niedermolekularen Blockierungsmittel wie beispielsweise Ethanol blockiert worden sind. Ein Naß-in-naß-Verfahren geht aus der europäischen Patentschrift nicht hervor.

Indes wird dieser Gedanke in der deutschen Patentschrift DE 41 26 476 A 1 wieder aufgegriffen. Sie beschreibt ein Naß-in-naß-Verfahren, bei dem ein kathodischer Elektrotauchlack verwendet wird, der aufgrund der Verwendung von mit Blockierungsmitteln eines niederen Molekulargewichts blockierten Polyisocyanaten oder von Polyepoxiden als Vernetzungsmitteln nur noch einen niedrigen Schrumpf beim Härten zeigt. Nachteilig für dieses bekannte Naß-in-naß-Verfahren ist es, daß es einerseits auf die Verwendung spezieller Vernetzungsmittel und andererseits auf die Anwendung spezieller wäßriger Beschichtungsstoffe beschränkt ist und daher nicht breit angewandt werden kann.

Aus der internationalen Patentanmeldung WO 98/07794 ist ein kathodischer Elektrotauchlack bekannt, der eine Dispersion enthält, die herstellbar ist, indem
(1) ein ethylenisch ungesättigtes Monomer oder eine Mischung aus ethylenisch ungesättigten Monomeren in
(2) einer wäßrigen Lösung eines wenigstens teilweise protonierten Epoxid-Aminaddukts polymerisiert wird, wobei
(3) das Epoxid-Aminaddukt erhältlich ist, indem
   (A) mindestens ein Glycidylether eines Polyphenols, der im statistischen Mittel mindestens eine Epoxidgruppe im Molekül enthält,
   (B) mindestens ein Polygycidylether eines Polyols, der im statistischen Mittel mehr als 1,0 Epoxidgruppen im Molekül enthält, und
   (C) mindestens eine Verbindung, die eine primäre Aminogruppe im Molekül enthält,
zu dem Epoxid-Aminaddukt umgesetzt werden, wobei die Komponenten (A) und (B) in einem Äquivalentverhältnis von 1,0 : 0,5 bis 1,0 : 8,0 eingesetzt werden und auf ein Äquivalent Epoxidgruppen aus (A) und (B) 0,3 bis 0,7 Mol der Komponente (C) eingesetzt werden.

Die aus dem bekannten Elektrotauchlack hergestellten Elektrotauchlackierungen weisen ein verbessertes mechanisch-technologisches Eigenschaftsprofil hinsichtlich der Haftfestigkeit, Härte, Biegeelastizität und Steinschlagfestigkeit sowie des Korrosionsschutzes und des Kantenschutzes auf. Ein Naß-in-naß-Verfahren der eingangs beschriebenen Art wird in der internationalen Patentanmeldungen nicht beschrieben. Nähere Angaben zur Glätte der Oberfläche der eingebrannten Elektrotauchlackierung werden nicht gemacht. Des weiteren läßt es sich der internationalen Patentanmeldung nicht entnehmen, welche Beschichtungsstoffe auf die Elektrotauchlackierung appliziert werden könnten und welchen Einfluß die Elektrotauchlackierung auf die Glätte der Beschichtungen hat.

Aufgabe der vorliegenden Erfindung ist es, ein neues Naß-in-naß-Verfahren der eingangs beschriebenen Art zu finden, das die Nachteile des Standes der Technik nicht mehr länger aufweist, sondern weitgehend oder völlig unabhängig von der Struktur der Vernetzungsmittel der kathodischen Elektrotauchlacke, insbesondere der blockierten Polyisocyanate, auch in geringer Schichtdicke glatte Mehrschichtlackierungen auf elektrisch leitfähigen Substraten liefert. Außerdem soll das neue Naß-in-naß-Verfahren, was die hiermit zu verarbeitenden Beschichtungsstoffe betrifft, sehr breit anwendbar sein.

Demgemäß wurde das neue Naß-in-naß-Verfahren zur Herstellung von Mehrschichtlackierungen auf elektrisch leitfähigen Substraten gefunden, bei dem man
(I) auf dem elektrisch leitfähigen Substrat einen kathodisch abscheidbaren Elektrotauchlack abscheidet,
(II) auf die resultierende Elektrotauchlackschicht mindestens einen thermisch oder thermisch und mit aktinischer Strahlung härtbaren Beschichtungsstoff appliziert, wonach man
(III) die Elektrotauchlackschicht und die Schicht aus dem Beschichtungsstoff oder die beiden genannten Schichten und noch mindestens eine darüberliegende weitere Schicht aus einem Beschichtungsstoff gemeinsam härtet,
wobei der kathodisch abscheidbare Elektrotauchlack eine wäßrige Dispersion enthält, herstellbar, indem
(1) ein ethylenisch ungesättigtes Monomer oder eine Mischung aus ethylenisch ungesättigten Monomeren in
(2) einer wäßrigen Lösung eines wenigstens teilweise protonierten Epoxid-Aminaddukts polymerisiert wird, wobei
(3) das Epoxid-Aminaddukt erhältlich ist, indem
   (A) mindestens ein Glydicylether eines Polyphenols, der im statistischen Mittel mindestens eine Epoxidgruppe im Molekül enthält,
   (B) mindestens ein Polygycidylether eines Polyols, der im statistischen Mittel mehr als 1,0 Epoxidgruppen im Molekül enthält, und
   (C) mindestens eine Verbindung, die eine primäre Aminogruppe im Molekül enthält,
zu dem Epoxid-Aminaddukt umgesetzt werden, wobei die Komponenten (A) und (B) in einem Äquivalentverhältnis von 1,0 : 0,5 bis 1,0 : 8,0 eingesetzt werden und auf ein Äquivalent Epoxidgruppen aus (A) und (B) 0,3 bis 0,7 Mol der Komponente (C) eingesetzt werden.

Im folgenden wird das neue Naß-in-naß-Verfahren zur Herstellung von Mehrschichtlackierungen auf elektrisch leitfähigen Substraten als "erfindungsgemäßes Verfahren" bezeichnet.

Weitere erfindungsgemäße Gegenstände gehen aus der Beschreibung hervor.

Im Hinblick auf den Stand der Technik war es überraschend und für den Fachmann nicht vorhersehbar, daß die Aufgabe, die der vorliegenden Erfindung zugrunde liegt, durch das erfindungsgemäße Verfahren gelöst werden konnte. Insbesondere überraschte, daß die durch das erfindungsgemäße Verfahren erhaltenen Vorteile nicht an die Verwendung spezieller Vernetzungsmittel gebunden ist. Noch mehr überraschte die außerordentlich breite Anwendbarkeit des erfindungsgemäße Verfahrens, insbesondere was die hierbei verwendbaren Beschichtungsstoffe betrifft.

Bei dem erfindungsgemäßen Verfahren wird in einem ersten Verfahrensschritt auf einem elektrisch leitfähigen Substrat ein kathodisch abscheidbarer Elektrotauchlack abgeschieden.

Die Substrate können aus allen Stoffen bestehen, deren elektrische Leitfähigkeit eine solche Abscheidung gestattet. Beispiele geeigneter Stoffe sind Metalle, elektrisch leitfähige Kunststoffe oder elektrisch leitfähige Keramikmaterialien, insbesondere aber Metalle. Die Substrate können auf den unterschiedlichsten technischen Gebieten angewandt werden. Insbesondere handelt es sich um Karosserien von Kraftfahrzeugen oder Teilen von Kfz-Karosserien, Möbel aus Metall oder industrielle Bauteile wie Coils, Container oder Emballagen, Schrauben, Muttern, Teile von Werkzeugen, Radkappen, Radiatoren oder Profilbleche für die Innen- und Außenanwendung bei Bauten.

Die Vorrichtungen für die kathodische Elektrotauchlackierung und die hierbei angewandten Bedingungen sind üblich und bekannt und werden beispielsweise in den eingangs genannten Patentschriften im Detail beschrieben.

Ebenso sind die kathodischen Elektrotauchlacke, die im erfindungsgemäßen Verfahren angewandt werden können, üblich und bekannt und werden ebenfalls in den eingangs genannten Patentschriften beschrieben. Weitere Beispiele geeigneter kathodischer Elektrotauchlacke gehen beispielsweise aus Seite 3, Zeilen 54 bis 58, der europäischen Patentschrift EP 0 595 186 A 1 oder den europäischen Patentschriften EP 0 074 634 A 1 und EP 0 505 445 A 1 hervor.

Der erfindungswesentliche Bestandteile der bei dem erfindungsgemäßen Verfahren angewandten kathodischen Elektrotauchlacke ist die wäßrige Dispersion.

Sie ist erhältlich, indem ein ethylenisch ungesättigtes Monomer oder eine Mischung aus ethylenisch ungesättigten Monomeren in einer wäßrigen Lösung eines wenigstens teilweise protonierten Epoxid-Aminaddukts polymerisiert wird, wobei das Epoxid-Aminaddukt erhältlich ist, indem (A) ein Glydicylether eines Polyphenols, der im statistischen Mittel mindestens eine Epoxidgruppe im Molekül enthält, oder ein Gemisch aus solchen Glycidylethern, (B) ein Polygycidylether eines Polyols, der im statistischen Mittel mehr als 1,0 Epoxidgruppen im Molekül enthält, oder ein Gemisch aus solchen Polyglycidylethern und (C) eine Verbindung, die eine primäre Aminogruppe im Molekül enthält, oder ein Gemisch aus solchen Verbindungen zu dem Epoxid-Aminaddukt umgesetzt werden, wobei die Komponenten (A) und (B) in einem Äquivalentverhältnis von 1,0 : 0,5 bis 1,0 : 8,0 eingesetzt werden und auf ein Äquivalent Epoxidgruppen aus (A) und (B) 0,3 bis 0,7 Mol der Komponente (C) eingesetzt werden.

Ein Epoxid-Aminaddukt des vorstehend genannten Aufbaus ist als solches aus der europäischen Patentanmeldung EP 0 505 445 B1 bekannt.

Ethylenisch ungesättigte Monomeren sind beispielsweise Substanzen der Gruppe "aliphatische oder aromatische Ethylenderivate, Alkylacrylsäureester, Alkylmethacrylsäureester, Hydroxyalkylacrylsäureester, Hydroxyalkylmethacrylsäureester, halogenierte Formen der genannten Monomere" oder Mischungen daraus, vorzugsweise dienfreie Verbindungen, insbesondere Styrol. Styrol ist einerseits kostengünstig verfügbar, andererseits lassen sich durch seinen Einsatz Dispersionen mit hervorragenden Eigenschaften herstellen. Beispiele für geeignete Acrylsäureester der allgemeinen Formel H₂C=CH-COOR sind Methyl-, Ethyl-, n-Butyl- und iso-Butylacrylsäureester. Beispiele für Hydroxyalkylacrylsäureester sind Hydroxyethyl- und Hydroxypropylacrylsäureester. Die bevorzugten Methacrylsäureester der allgemeinen Formel 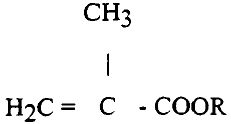 sind Methyl-, Butyl-, Hexyl- und Octyl-Methacrylat. Beispiele für Hydroxyalklymethacrylate sind Hydroxyethyl- und Hydoxypropylmethacrylat.

Das aus (A), (B) und (C) erhaltene Epoxid-Aminaddukt ist vorzugsweise epoxidgruppenfrei. Für den Fall, daß es noch Epoxidgruppen enthält, ist es zweckmäßig, die verbliebenen Epoxidgruppen mit Verbindungen wie z. B. Monophenolen und Aminen, insbesondere sekundären Aminen umzusetzen (Beispiele für Verbindungen, die zur Umsetzung mit noch verbliebenen Epoxidgruppen geeignet sind, sind in der europäischen Patentschrift EP 0 253 404 A 1 auf der Seite 8, Zeilen 28 bis 37, und Seite 9, Zeile 16, bis Seite 10, Zeile 15, aufgezählt).

Bevorzugte Epoxid-Aminaddukte werden erhalten, wenn die Komponenten (A) und (B) in einem Äquivalentverhältnis von 1,0:1,0 bis 1,0:2,0 eingesetzt werden, und wenn die Komponente (C) in einer solchen Menge eingesetzt wird, daß auf ein Äquivalent Epoxidgruppen aus (A) und (B) 0,4 bis 0,6 Mol der Komponente (C) kommen.

Das zahlenmittlere Molekulargewicht der Epoxid-Aminaddukte liegt vorzugsweise zwischen 1.000 und 10.0000, bevorzugt zwischen 3.000 und 15.000 Dalton. Die Komponente (C) kann nacheinander mit (A) und (B) oder - was bevorzugt ist - mit einem Gemisch aus (A) und (B) umgesetzt werden. Die Umsetzung der Komponenten (A), (B) und (C) kann schon bei Raumtemperatur ablaufen. Zur Erreichung wirtschaftlicher Umsatzzeiten ist es zweckmäßig, die Reaktionstemperatur zu erhöhen, z. B. auf 60 bis 130 °C. Die Umsetzung der Komponenten (A), (B) und (C) wird gegebenenfalls in einem organischen Lösemittel wie z.B. Ethylenglykolmonobutylether oder Propylenglycolmonobutylether durchgeführt. Anschließend wird mit einer Säure, wie z. B. Essigsäure oder Milchsäure, neutralisiert und in eine wäßrige Dispersion oder Lösung überführt. Die so erhaltene Dispersion bzw. Lösung kann dann nach allgemein gut bekannten Methoden weiterverarbeitet werden. Es ist auch möglich, das aus (A), (B) und (C) erhaltene, in einem organischen Lösemittel gelöste Reaktionsprodukt mit Pigmenten und ggf. Füllstoffen zu vermischen und unter Zusatz von Säure und ggf. Wasser zu einer Pigmente enthaltenden Dispersion weiterzuverarbeiten. Es können selbstverständlich auch Mischungen der Epoxid-Aminaddukte eingesetzt werden.

Als Komponente (A) kann im Prinzip jeder Glycidylether eines Polyphenols, der im statistischen Mittel mindestens eine Epoxidgruppe im Molekül enthält, oder ein Gemisch aus solchen Glycidylethern eingesetzt werden. Als Komponente (A) können beispielsweise Glycidylether der auf Seite 4 der europäischen Patentschrift EP 0 253 404 A 1 zu findenden allgemeinen Strukturformeln (I) und (II) eingesetzt werden. Als Komponente (A) werden vorzugsweise ggf. mit der Komponente (b) (vgl. unten) modifizierte Bisphenol-A-diglycidylether mit einem Epoxidäquivalentgewicht von 180 bis 3.000, vorzugsweise 180 bis 1.000 eingesetzt. Als Komponente (A) werden besonders bevorzugt Gemische von Glycidylethern verwendet, die erhältlich sind, indem in Gegenwart eines Katalysators, der die Reaktion zwischen phenolischen Hydroxylgruppen und Epoxidgruppen katalysiert, aus
(a) einem Diglycidylether eines Polyphenols, vorzugsweise einem Diglycidylether von Bisphenol-A mit einem zahlenmittleren Molekulargewicht von 260 bis 450, vorzugsweise von 370 bis 380 oder einem Gemisch aus solchen Diglycidylethern,
(b) einem ggf. substituierten Monophenol, vorzugsweise einem Alkylphenol mit 1 bis 18, vorzugsweise 4 bis 12 Kohlenstoffatomen im Alkylrest, oder eine Mischung aus solchen Monophenolen und
(c) einem Diphenol, vorzugsweise Bisphenol A und
(d) einem Katalysator, der die Reaktion zwischen aliphatischen Hydroxylgruppen und Epoxidgruppen katalysiert,

Glycidylether hergestellt werden, die ein zahlenmittleres Molekulargewicht von 980 bis 4.000, vorzugsweise 980 bis 2.000 aufweisen, und die im statistischen Mittel pro Molekül 1,0 bis 3,0, vorzugsweise 1,2 bis 1,6 Epoxidgruppen und 0,25 bis 1,3, vorzugsweise 0,4 bis 0,9 von der Komponente (b) stammende Phenylethergruppen enthalten. Die Herstellung der besonders bevorzugt eingesetzten Komponente (A) erfolgt vorzugsweise in organischen Lösemitteln wie z.B. Xylol, Ethylenglykolmonobutylether oder Propylenglykolmonobutylether. Die Reaktionstemperaturen liegen zweckmäßigerweise bei 100-180 °C. Katalysatoren (d), die die Reaktion zwischen phenolischen Hydroxylgruppen und Epoxidgruppen katalysieren, sind dem Fachmann bekannt. Als Beispiele werden genannt: Triphenylphosphin und die auf Seite 9 in den Zeilen 6 bis 9 der europäischen Patentschrift EP 0 253 404 A 1 genannten Katalysatoren. Die Komponente (c) soll dafür sorgen, daß aus der Komponente (a) höhermolekulare Glycidylether aufgebaut werden. Dieser Aufbau kann durch Kettenverlängerung mit einem Diphenol, vorzugsweise mit Bisphenol A erreicht werden. Der Aufbau kann aber auch durch Reaktion von in der Komponente (a) bzw. im Umsetzungsprodukt aus (a) und (b) enthaltenen aliphatischen Hydroxylgruppen mit Epoxidgruppen erfolgen. Um diese Reaktion gezielt zum Aufbau der gewünschten Glycidylether ausnutzen zu können, müssen Katalysatoren (d) (z.B. tertiäre Amine) eingesetzt werden, die die Reaktion zwischen aliphatischen Hydroxylgruppen und Epoxidgruppen katalysieren. Durch den Einsatz von Diphenol und einem Katalysator gemäß (d) ist es möglich, beide Aufbaureaktionen - die Kettenverlängerung über das Diphenol und die Additionsreaktion zwischen aliphatischen Hydroxylgruppen und Epoxidgruppen - zu nutzen. Die Umsetzung mit der Komponente (b) soll die bevorzugten Glycidylether modifizieren und zur Bildung von aliphatischen Hydroxylgruppen führen, die benötigt werden, wenn Aufbaureaktionen über Additionsreaktionen von aliphatischen Hydroxylgruppen an Epoxidgruppen ablaufen sollen. Durch die Angabe des zahlenmittleren Molekulargewichtes der herzustellenden besonders bevorzugten Komponente (A) und die Angaben über die in der Komponente (A) enthaltenen Epoxidgruppen und von der Komponente (b) stammenden Phenylethergruppen ist es dem Fachmann problemlos möglich, die einzusetzenden Mengen an (a), (b) und (c) zu errechnen. Wenn über die Reaktion von aliphatischen Hydroxylgruppen und Epoxidgruppen ablaufende Aufbaureaktionen angewandt werden, muß die Aufbaureaktion nach Erreichen des vom Fachmann aus dem anzustrebenden zahlenmittleren Molekulargewicht und dem anzustrebenden Epoxidgruppengehalt errechenbaren Epoxidäquivalentgewichts abgebrochen werden. Dies geschieht zweckmäßigerweise durch Temperaturerniedrigung und Verdünnen der Reaktionsmischung.

Als Komponente (B) kann im Prinzip jeder Polyglycidylether eines Polyols, der im statistischen Mittel mehr als 1,0 Epoxidgruppen im Molekül enthält, oder ein Gemisch aus solchen Polyglycidylethern eingesetzt werden. Als Komponente (B) können beispielsweise die Polyglycidylether eingesetzt werden, die in der europäischen Patentschrift EP 0 253 404 A 1 ab Zeile 42 der Seite 4 bis Zeile 13 der Seite 8 beschrieben sind. Als Komponente (B) werden vorzugsweise Polyglycidylether von Polyetherpolyolen, besonders bevorzugt Diglycidylether von Polyetherdiolen mit zahlenmittleren Molekulargewichten von 300 bis 3.000, vorzugsweise 400 bis 1.200 eingesetzt. Als Beispiele für besonders bevorzugte Polyglycidylether werden Diglycidylether von Poly(ethylenglykol), Poly(propylenglykol), Poly(ethylenglykolpropylenglycol) und Poly(1,4-butandiol) genannt, wobei die zahlenmittleren Molekulargewichte der Diglycidylether zwischen 300 bis 3.000, vorzugsweise zwischen 400 bis 1.200 liegen.

Als Komponente (C) wird eine Verbindung eingesetzt, die eine primäre Aminogruppe im Molekül enthält, oder ein Gemisch aus solchen Verbindungen. Die Komponente (C) darf nur eine primäre Aminogruppe im Molekül enthalten.

Die Komponente (C) kann neben der primären Aminogruppe noch weitere funktionelle Gruppen wie z.B. tertiäre Aminogruppen und Hydroxylgruppen enthalten. Die Komponente (C) wird unter Bildung von tertiären Aminogruppen in die erfindungsgemäßen Epoxid-Aminaddukte eingebaut. Eine primäre Aminogruppe reagiert dabei mit zwei Epoxidgruppen und verknüpft somit kettenverlängernd zwei Moleküle der Komponenten (A) und/oder (B). Ein Teil der Komponente (C) kann auch mit endständigen Epoxidgruppen unter Bildung von sekundären Aminogruppen reagieren. Als Komponente (C) kann im Prinzip jede Verbindung eingesetzt werden, die eine und nur eine primäre Aminogruppe im Molekül enthält. Als Beispiele werden Verbindungen der allgemeinen Formel H₂N-CR₁R₂-R₃-O(CHR₄-CHR₅-O)ₙR₆ genannt: In dieser Formel stehen R₁ und R₂ für Wasserstoff, Alkyl- oder -CH-OH Gruppen, R₃ steht für einen linearen oder verzweigten Alkylenrest, insbesondere für einen Alkylenrest mit 1 bis 3 Kohlenstoffatomen, R₄ und R₅ stehen für Wasserstoff oder Alkylreste mit 1 bis 4 Kohlenstoffatomen, R₆ steht für Wasserstoff, einen Alkyl-, Cycloalkyl- oder Phenylrest, vorzugsweise für einen Alkylrest mit 1 bis 6 Kohlenstoffatomen und n = 0 bis 5. Beispiele für geeignete Verbindungen dieses Typs sind Ethanolamin, Propanolamin, Butanolamin. 2-Amino-2-methylpropanol-1 (H₂N-C(CH₃)₂-CH₂OH), 2-Amino-2-ethylpropanol-1 und ethoxyliertes und/oder propoxyliertes Ethanolamin oder Propanolamin, wie z.B. 2-2'-Aminoethoxyethanol (H₂N-CH₂-CH₂-O-CH₂-CH₂-OH) und Diethylenglykolmono(3-aminoproyl)-ether (H₂N-(CH₂)₃-O-CH₂-CH₂-O-CH₂-CH₂-OH). Als Komponente (C) können auch Verbindungen eingesetzt werden, die eine primäre und eine tertiäre Aminogruppe im Molekül enthalten. Als Beispiele werden genannt: N,N Dimethylaminopropylamin, N,N Diethylaminoethylamin und dergleichen. Als Komponente (C) können auch primäre Alkylamine wie z.B. Hexylamin eingesetzt werden. Auch ggf. substituiertes Anilin kann als Komponente (C) eingesetzt werden. Als Komponente (C) werden vorzugsweise Hexylamin und N,N-Dimethylaminopropylamin sowie 2-2'-Aminoethoxyethanol eingesetzt.

Eine bevorzugte Ausführungsform ist dadurch gekennzeichnet, daß die Dispersionen erhältlich sind, indem das ethylenisch ungesättigte Monomer bzw. die Mischung aus ethylenisch ungesättigten Monomeren und das wenigstens teilweise protonierte Epoxid-Aminaddukt in einem Gewichtsverhältnis von 9,0:1,0 bis 0,1:1,0, vorzugsweise von 5,0:1,0 bis 1,0:1,0, besonders bevorzugt von 2,5:1,0 bis 3,5:1,0, eingesetzt werden.

Im einzelnen kann als ethylenisch ungesättigtes Monomer allein Styrol eingesetzt werden. Alternativ dazu kann als Mischung aus ethylenisch ungesättigten Monomeren eine Mischung aus Styrol und mindestens einem weiteren, mit Styrol copolymerisierbaren ungesättigten Monomer eingesetzt werden. In letzterem Fall kann die Mischung aus ethylenisch ungesättigten Monomeren vorteilhafterweise mindestens 70 Gew.-%, vorzugsweise mindestens 80 Gew.-%, besonders bevorzugt mindestens 90 Gew.-%, Styrol enthalten.

In Weiterbildung der Erfindung kann das ethylenisch ungesättigte Monomer oder die Mischung aus ethylenisch ungesättigten Monomeren unter Verwendung eines wasserunlöslichen Initiators oder einer Mischung aus wasserunlöslichen Initiatoren radikalisch polymerisiert sein. Hierbei hat es sich als sehr zweckmäßig erwiesen, den wasserunlöslichen Initiator bzw. die Mischung aus wasserunlöslichen Initiatoren in einer Menge von 0,1 bis 10,0 Gew.-%, vorzugsweise von 0,5 bis 5,0 Gew.-%, besonders bevorzugt von 0,3 bis 3,0 Gew.-%, bezogen auf die Menge an eingesetztem ethylenisch ungesättigtem Monomer bzw. auf die Menge an eingesetzter Mischung aus ethylenisch ungesättigten Monomeren, einzusetzen. Als Initiatoren kommen alle üblichen Initiatoren für die Radikalkettenpolymerisation in Frage. Hierzu gehören insbesondere AzoVerbindungen, Peroxide, Hydroperoxide und Perester, ferner Redox-Initiatoren. Besonders bevorzugt ist der Einsatz von Azoisovaleronitril als Initiator.

Eine bevorzugte Weiterbildung der Erfindung ist dadurch gekennzeichnet, daß die wäßrigen Dispersionen erhältlich sind, indem mindestens 50 Gew.-%, vorzugsweise mindestens 75 Gew.-%, besonders bevorzugt 100 Gew.-%, der insgesamt eingesetzten Menge an Initiator vorgelegt werden, und die Zugabe des ethylenisch ungesättigten Monomeren bzw. die Zugabe der Mischung aus ethylenisch ungesättigten Monomeren während höchstens 3 Stunden, bevorzugt während höchstens 2 Stunden, besonders bevorzugt während höchstens einer Stunde, erfolgt.

Der Gehalt des erfindungsgemäß zu verwendenden kathodischen Elektrotauchlacks an der Dispersion kann sehr breit variieren und richtet sich nach den Erfordernissen des Einzelfalls, wie sie sich beispielsweise aus der Menge und der Art der anderen Bestandteile ergeben. Vorzugsweise enthält der kathodisch Elektrotauchlacks die Dispersion in einer Menge von 1,0 bis 50 Gew.-%, bevorzugt 2,0 bis 30 Gew.-% und insbesondere 3,0 bis 20 Gew.-%, jeweils bezogen auf den Festkörpergehalt des kathodischen Elektrotauchlacks.

Die Viskosität der Dispersion kann beliebig gewählt werden. Sie liegt z.B. bei 23°C und 50 bis 60 Gew.-% Festkörpergehalt der Dispersion im Bereich von über 5.000 mPas. In der Regel können die Viskositäten bis zu 10.000 mPas betragen. Die polymerisierten ethylenisch ungesättigten Monomere weisen typischerweise (aber nicht zwingend) ein massenmittleres Molekulargewicht von mehr als 100.000 auf. Im einzelnen weisen die dabei erhaltenen Polymerpartikel vorteilhafterweise eine Größe von bis zu 20 µm, vorzugsweise bis zu 10 µm, auf. Zur Einstellung dieser Verhältnisse ist es hilfreich, wenn der Feststoffgehalt der Epoxid-Aminaddukt-Lösung bzw. -Dispersion im Bereich von 45 bis 60% und die Temperatur bei der Polymerisation der Monmere im Bereich von 70°C bis 90°C liegt. Eine Vermessung der Teilchengröße kann z.B. mit Hilfe der Lichtmikroskopie erfolgen. Mit einer derartigen Größe von Polymerpartikeln läßt sich einerseits die notwendige Dispersionskonsistenz erreichen, andererseits werden hierdurch die Eigenschaften der Elektrotauchlackierungen positiv beeinflußt. Eine befriedigend geringe Dichte der Elektrotauchlackierung wird erreicht, wenn die vorstehend angegebenen Gewichtsverhältnisse eingehalten werden. Es ist von Vorteil, wenn das Epoxid-Aminaddukt in der Zusammensetzung strukturgleich oder strukturähnlich mit dem Bindemittel des Tauchlackes ist.

Die Dispersionen können über ein Pastenharz, beispielsweise eine Pigmentpaste, in den Elektrotauchlack eingeführt werden. Sie können bevorzugt vor, während und/oder nach dem Mahlprozeß zur Pigmentpaste gegeben werden. Sie können aber auch als alleiniges Anreibeharz eingesetzt werden. Ebenso ist eine Einführung über die Bindemitteldispersion des Lackes möglich.

Darüber hinaus können die erfindungsgemäß zu verwendenden kathodischen Elektrotauchlacke geeignete Zusatzstoffe, inklusive Pigmente, enthalten, wie sie beispielsweise in der internationalen Patentanmeldung WO 98/07794, Seite 13, Zeilen 8 bis 32, in dem Lehrbuch "Lackadditive" von Johan Bieleman, Wiley-VCH, Weinheim, New York, 1998, in Römpp Lexikon Lacke und Druckfarben, Georg Thieme Verlag, 1998, Seiten 176: »Effektpigmente«, Seiten 380 und 381: »Metalloxid-Glimmer-Pigmente« bis »Metallpigmente«, Seiten 180 und 181: »Eisenblau-Pigmente« bis »Eisenoxidschwarz«, Seiten 451 bis 453: »Pigmente« bis »Pigmentsvolumenkonzentration«, Seite 563: »Thioindigo-Pigmente«, Seite 567: »Titandioxid-Pigmente«, Seiten 250 ff.: »Füllstoffe«, Seiten 623 und 624: »Wasserlack-Additive« oder der europäischen Patentschrift EP 0 693 540 A 2, Seite 5, Zeilen 6 bis 10, im Detail beschrieben werden. Diese Zusatzstoffe können auch in den erfindungsgemäß zu verwendenden Beschichtungsstoffen enthalten sein.

Nach der Abscheidung des erfindungsgemäß zu verwendenden kathodischen Elektrotauchlacks auf dem elektrisch leitfähigen Substrat wird die resultierende Elektrotauchlackschicht unmittelbar mit mindestens einem thermisch oder thermisch und mit aktinischer Strahlung härtbaren Beschichtungsstoff überschichtet. Zuvor kann sie mit Wasser gespült werden. Sie kann aber auch unmittelbar nach der Abscheidung oder nach der Spülung mit Wasser getrocknet werden, ohne daß sie hierbei vernetzt oder gehärtet wird. Vorzugsweise wird die Elektrotauchlackschicht vor der Applikation weiterer Schichten getrocknet.

Erfindungsgemäß kann mehr als ein Beschichtungsstoff auf die Elektrotauchlackschicht appliziert werden. Vorzugsweise werden hierbei unterschiedlich zusammengesetzte Beschichtungsstoffe angewandt, die unterschiedliche technologische Funktionen erfüllen. Hierdurch resultieren letztendlich Mehrschichtlackierungen mit drei und mehr Schichten. An und für sich ist die Zahl der Schichten nach oben nicht begrenzt. Aus wirtschaftlichen Gründen wird man allerdings bestrebt sein, die Anzahl der Schichten auf das notwendige Maß zu begrenzen, da jede zusätzliche Schicht einen zusätzlichen wirtschaftlichen und technischen Aufwand bedeutet. Im allgemeinen reichen aber vier bis fünf Schichten aus, um auch sehr komplexe technologische Anforderungen zu erfüllen, wie sie beispielsweise in der Automobilserienlackierung gestellt werden. Solche Mehrschichtlackierungen umfassen beispielsweise eine Elektrotauchlackierung, eine Füllerlackierung oder eine Steinschlagschutzgrundierung, eine Basislackierung, eine Klarlackierung sowie gegebenenfalls eine hochkratzfeste Beschichtung.

Der erfindungsgemäß zu verwendende Beschichtungsstoff ist pigmentiert. Beispiele geeigneter pigmentierter Beschichtungsstoffe sind Füller, Steinschlagschutzgrundierungen, Basislacke oder Unidecklacke.

Der erfindungsgemäß zu verwendende Beschichtungsstoff kann indes auch unpigmentiert sein. Beispiele geeigneter nicht pigmentierter Beschichtungsstoffe sind Klarlacke.

Der Beschichtungsstoff ist thermisch härtend. Hierbei kann er selbstvemetzend oder fremdvernetzend sein. Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind. Als fremdvernetzend werden dagegen solche Beschichtungsstoffe bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Geeignete Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze wie sie in Römpp Lexikon Lacke und Druckfarben, Georg Thieme Verlag, Stuttgart, New York, 1998, Seite 457: »Polyaddition« und »Polyadditionsharze (Polyaddukte)«, Seiten 463 und 464: »Polykondensate«, »Polykondensation« und »Polykondensationsharze«, sowie Seiten 73 um 74: »Bindemittel«, beschrieben werden.

Beispiele geeigneter komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R' und R" stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

### Bindemittel und Vernetzungsmittel oder Vernetzungsmittel und Bindemittel

| | |
|---|---|
| -SH | -C(O)-OH |
| -NH₂ | -C(O)-O-C(O)- |
| -OH | -NCO |
| -O-(CO)-NH-(CO)-NH₂ | -NH-C(O)-OR |
| -O-(CO)-NH₂ | -CH₂-OH |
| >NH | -CH₂-O-R |
| | -NH-CH₂-OH |
| | -NH-CH₂-O-R |
| | -N(-CH₂-O-R)₂ |
| | -NH-C(O)-CH(-C(O)OR)₂ |
| | -NH-C(O)-CH(-C(O)OR)(-C(O)-R) |
| | -NH-C(O)-NR'R" |
| | = Si(OR)₂ |
| | O |
| | -CH-CH₂ |
| -C(O)-OH | O |
| | -CH-CH₂ |

Die Auswahl der jeweiligen komplementären Gruppen richtet sich zum einen danach, daß sie bei der Lagerung und Applikationen des Beschichtungsstoffs keine unerwünschten Reaktionen eingehen und/oder gegebenenfalls eine zusätzliche Härtung mit aktinischer Strahlung nicht stören oder inhibieren dürfen, und zum anderen danach, in welchem Temperaturbereich die Vernetzung stattfinden soll.

Vorzugsweise werden bei den thermisch härtbaren Beschichtungsstoffen Vernetzungstemperaturen von 100 bis 200 °C angewandt. Es werden daher in den Bindemitteln vorzugsweise Thio-, Hydroxyl-, Methylol-, Methylolether, N-Methylol- N-Alkoxymethylamino-, Imino-, Carbamat-, Allophanat- und/oder Carboxylgruppen, insbesondere aber Carboxylgruppen oder Hydroxylgruppen, speziell Hydroxylgruppen, einerseits und in den Vernetzungsmitteln Anhydrid-, Carboxy-, Epoxy-, blockierten Isocyanat-, Urethan-, Methylol-, Methylolether-, N-Methylol- N-Alkoxymethylamino-, Siloxan-, Amino-, Hydroxy- und/oder beta-Hydroxyalkylamidgruppen, insbesondere aber blockierte Isocyanatgruppen oder Epoxygruppen, andererseits angewandt. Für die Herstellung selbstvernetzender Bindemittel werden vorzugsweise Methylol-, Methylolether, N-Methylol- oder N-Alkoxymethylaminogruppen eingesetzt.

Beispiele geeigneter Vernetzungsmittel sind Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A 1 oder EP-B-0 245 700 A 1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A 1 beschrieben werden, Epoxidgruppen enthaltende Verbindungen oder Harze, wie sie beispielsweise in den Patentschriften EP 0 299 420 A 1, DE 22 14 650 B 1, DE 27 49 576 B 1, US 4,091,048 A 1 oder US 3,781,379 A 1 beschrieben werden, blockierte Polyisocyanate, wie sie beispielsweise in den Patentschriften US 4,444,954 A 1, DE 196 17 086 A 1, DE 196 31 269 A 1, EP 0 004 571 A 1 oder EP 0 582 051 A 1 beschrieben werden, und/oder Tris(alkoxycarbonylamino)triazine, wie sie in den Patentschriften US 4,939,213 A 1, US 5,084,541 A 1, US 5,288,865 A 1 oder EP 0 604 922 A 1 beschrieben werden.

Der Beschichtungsstoff ist des weiteren thermisch und mit aktinischer Strahlung härtbar, was von der Fachwelt auch als "Dual Cure" bezeichnet wird. Im Rahmen der vorliegenden Erfindung ist unter aktinischer Strahlung elektromagnetische Strahlung, wie sichtbares Licht, UV-Strahlung oder Röntgenstrahlung, insbesondere UV-Strahlung, und Korpuskularstrahlung wie Elektronenstrahlung zu verstehen.

Die Bindemittel der Dual Cure-Beschichtungsstoffe sowie gegebenenfalls vorhandene Reaktivverdünner (vgl. Römpp Lexikon Lacke und Druckfarben, Georg Thieme Verlag, Stuttgart, New York, 1998, Seite 491: »Reaktivverdünner«) enthalten Gruppen, die mindestens eine mit aktinischer Strahlung aktivierbare Bindung aufweisen, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen.

Von diesen sind die Kohlenstoff-Kohlenstoff-Doppelbindungen besonders vorteilhaft und werden deshalb erfindungsgemäß ganz besonders bevorzugt verwendet. Der Kürze halber werden sie als "Doppelbindungen" bezeichnet.

Besonders gut geeignete Doppelbindungen sind beispielsweise in (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen enthalten. Von diesen bieten die Acrylatgruppen ganz besondere Vorteile, weswegen sie besonders bevorzugt verwendet werden.

Die Vernetzung mit aktinischer Strahlung kann außerdem noch mit geeigneten Photoinitiatoren (vgl. Römpp Lexikon Lacke und Druckfarben, Georg Thieme Verlag, Stuttgart, New York, 1998, Seiten 444 bis 446: »Photoinitiatoren«) initiiert oder beschleunigt werden.

Der Beschichtungsstoff kann ein Einkomponenten(1K)-System sein.

Im Rahmen der vorliegenden Erfindung ist unter einem Einkomponenten(1K)-System ein thermisch oder thermisch und mit aktinischer Strahlung härtender Beschichtungsstoff zu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und/oder bei Bestrahlen mit aktinischer Strahlung miteinander vernetzen.

Der Beschichtungsstoff kann des weiteren ein Zweikomponenten(2K)- oder Mehrkomponenten(3K, 4K)-System sein.

Im Rahmen der vorliegenden Erfindung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren.

Des weiteren kann der Beschichtungsstoff im wesentlichen frei von Wasser und/oder organischen Lösemitteln und pulverförmig oder flüssig sein (100%-System). Im Rahmen der vorliegenden Erfindung bedeutet "im wesentlichen frei", daß der Gehalt an Wasser und/oder organischen Lösemitteln unter 5,0, vorzugsweise unter 3,0, bevorzugt unter 2,0, besonders bevorzugt unter 1,0, ganz besonders bevorzugt unter 0,5 Gew.-% und insbesondere unterhalb der gaschromatographischen Nachweisgrenze liegt.

Es kann sich indes auch um einen auf Wasser basierenden Beschichtungsstoff, insbesondere einen Wasserfüller, Wasserbasislack oder eine wäßrige Pulverlackdispersion (Pulverslurry), handeln.

Nicht zuletzt kann es sich auch um einen konventionellen, d. h. um einen auf organischen Lösemitteln basierenden Beschichtungsstoff handeln.

Beispiele geeigneter für das erfindungsgemäße Verfahren zu verwendender Füller oder Steinschlagschutzgrundierungen sind aus den Patentschriften US 4,537,926 A 1, EP 0 529 335 A 1, EP 0 595 186 A 1, EP 0 639 660 A 1, DE 44 38 504 A 1, DE 43 37 961 A 1, WO 89,/10387, US 4,450,200 A 1, US 4,614,683 A 1 oder WO 490/26827 bekannt.

Beispiele geeigneter für das erfindungsgemäße Verfahren zu verwendender farb- und/oder effektgebender Basislacke, insbesondere Wasserbasislacke, sind aus den Patentschriften EP 0 089 497 A 1, EP 0 256 540 A 1, EP 0 260 447 A 1, EP 0 297 576 A 1, WO 96/12747, EP 0 523 610 A 1, EP 0 228 003 A 1, EP 0 397 806 A 1, EP 0 574 417 A 1, EP 0 531 510 A1, EP 0 581 211 A 1, EP 0 708 788 A 1, EP 0 593 454 A 1, DE-A-43 28 092 A 1, EP 0 299 148 A 1, EP 0 394 737 A 1, EP 0 590 484 A 1, EP 0 234 362 A 1, EP 0 234 361 A 1, EP 0 543 817 A 1, WO 95/14721, EP 0 521 928 A 1, EP 0 522 420 A 1, EP 0 522 419 A 1, EP 0 649 865 A 1,EP0536712A 1, EP 0 596 460 A 1, EP 0 596 461 A 1, EP 0 584 818 A 1, EP 0 669 356 A 1, EP 0 634 431 A 1, EP 0 678 536 A 1, EP 0 354 261 A 1, EP 0 424 705 A 1, WO 97/49745, WO 97/49747, EP 0 401 565 A 1 oder EP 0 817 684, Spalte 5, Zeilen 31 bis 45, bekannt.

Beispiele geeigneter für das erfindungsgemäße Verfahren zu verwendender Einkomponenten(1K)-, Zweikomponenten(2K)- oder Mehrkomponenten(3K, 4K)-Klarlacke sind aus den Patentschriften DE 42 04 518 A 1, US 5,474,811 A 1, US 5,356,669 A 1, US 5,605,965 A 1, WO 94/10211, WO 94/10212, WO 94/10213, EP 0 594 068 A 1, EP 0 594 071 A 1, EP 0 594 142 A 1, EP 0 604 992 A 1, WO 94/22969, EP 0 596 460 A 1, EP 0 549 116 A 2, EP 0 928 800 A 1 oder WO 92/22615 bekannt.

Beispiele geeigneter für das erfindungsgemäße Verfahren zu verwendender Pulverklarlacke sind beispielsweise aus der deutschen Patentschrift DE-A-42 22 194 oder der Produkt-Information der Firma BASF Lacke + Farben AG, "Pulverlacke", 1990 bekannt.

Beispiele geeigneter für das erfindungsgemäße Verfahren zu verwendender Pulverslurry-Klarlacke sind beispielsweise aus der US-Patentschrift US-A-4,268,542 und den deutschen Patentanmeldungen DE 195 40 977 A 1, DE 195 18 392 A 1, DE 196 17 086 A 1, DE-A-196 13 547, DE 196 52 813 A 1, DE-A-198 14 471 A 1 bekannt.

Beispiele geeigneter für das erfindungsgemäße Verfahren zu verwendender, hochkratzfeste Beschichtungen liefernder Beschichtungsstoffe werden in den deutschen Patentschriften DE 43 03 570 A 1, DE 34 07 087 A 1, DE 40 11 045 A 1, DE 40 25 215 A 1, DE 38 28 098 A 1, DE 40 20 316 A 1 oder DE 41 22 743 A 1 beschrieben. Geeignet sind auch organisch modifizierte Keramikmaterialien, die unter dem Markennamen ORMOCER® vertrieben werden.

Die Applikation des Beschichtungsstoffs oder der Beschichtungsstoffe kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoffs selbst, betrieben wird.

Bevorzugt wird die Applikation bei Beleuchtung mit sichtbarem Licht einer Wellenlänge von über 550 µm oder unter Lichtausschluß durchgeführt, wenn der Beschichtungsstoffs thermisch und mit aktinischer Strahlung härtbar ist. Hierdurch werden eine stoffliche Änderung oder Schädigung des Wasserbasislacks und des Overspray vermieden.

Im allgmeinen werden die Beschichtungsstoffe in einer Naßschichtdicke appliziert, daß nach ihrer Aushärtung Schichten mit der für ihre Funktionen notwendigen und vorteilhaften Schichtdicken resultieren. Im Falle der Füllerlackierung oder Steinschlagschutzgrundierung liegt sie vorzugsweise bei 10 bis 150 µm, im Falle der Basislackierung liegt sie vorzugsweise bei 5 bis 50, bevorzugt 5 bis 40, besonders bevorzugt 5 bis 30 und insbesondere 10 bis 25 µm, und im Falle der Klarlackierungen liegt sie bei vorzugsweise 10 bis 100, bevorzugt 15 bis 80, besonders bevorzugt 20 bis 75 und insbesondere 25 bis 70 µm. Hochkratzfeste Beschichtungen weisen im allgemeinen geringere Schichtdicken, beispielsweise unter 5,0 µm, auf.

Nach der Applikation des Beschichtungsstoffs oder der Beschichtungsstoffe werden die resultierenden Schichten gemeinsam gehärtet.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Schichten und zum Verdunsten von flüchtigen Bestandteilen wie Wasser und/oder organischen Lösemitteln. Die Ruhezeit kann durch die Anwendung erhöhter Temperaturen bis 120°C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Wie bei der nachstehend beschriebenen Härtung mit aktinischer Strahlung kann auch die thermische Härtung stufenweise erfolgen. Vorteilhafterweise erfolgt die thermische Härtung bei Temperaturen oberhalb 100 °C. Im allgemeinen empfiehlt es sich, hierbei Temperaturen von 200 °C, vorzugsweise 190 °C und insbesondere 185 °C nicht zu überschreiten.

Vorzugsweise wird die Härtung mit aktinischer Strahlung mit UV-Strahlung und/oder Elektronenstrahlen durchgeführt. Vorzugsweise wird hierbei eine Dosis von 1.000 bis 2.000, bevorzugt 1.100 bis 1.900, besonders bevorzugt 1.200 bis 1.800, ganz besonders bevorzugt 1.300 bis 1.700 und insbesondere 1.400 bis 1.600 mJ/cm² angewandt. Gegebenenfalls kann diese Härtung mit aktinischer Strahlung von anderen Strahlenquellen ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der obersten Lackschicht gewährleistet werden. Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Blitzlampen der Firma VISIT, Quecksilberhoch- oder - niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken, wie sie für Automobilkarosserien vorgesehen sind, können die nicht direktor Strahlung zugänglichen Bereiche (Schattenbereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt (Dual Cure), können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden.

Das erfindungsgemäße Verfahren liefert Mehrschichtlackierungen, die Mehrschichtlackierungen, die nicht in erfindungsgemäßer Verfahrensweise hergestellt worden sind, in der Oberflächenglätte, der Korrosionsschutzwirkung, der Haftung auf dem Substrat, der Zwischenschichthaftung, der Steinschlagbeständigkeit, der Kantenschutzwirkung, der Witterungsbeständigkeit und Chemikalienbeständigkeit übertreffen.

Die erfindungsgemäßen Mehrschichtlackierungen haben daher eine besonders hohe Qualität und eine lange Gebrauchsdauer auch unter klimatisch extremen Bedingungen, was sie für den Anwender wirtschaftlich und technisch ganz besonders attraktiv macht.

### Beispiele und Vergleichsversuche

### Herstellbeispiel 1

### Herstellung eines Vernetzungsmittels für einen Elektrotauchlack

In einem Reaktor wurden 10.462 Teile Isomere und höherfunktionelle Oligomere auf Basis von 4,4'-Diphenylmethandiisocyanat mit einem NCO-Equivalentgewicht von 135 g/eq (Lupranat^{R} M20S der Fa. BASF AG; NCO-Funktionalität ca. 2,7; Gehalt an 2,2'- und 2,4'-Diphenylmethandiisocyanat unter 5%) unter Stickstoffatmosphäre vorgelegt. Man gab 20 Teile Dibutylzinndilaurat zu und tropfte 9.626 Teile Butyldiglykol so zu, daß die Produkttemperatur unter 60 °C blieb. Nach Ende der Zugabe wurde die Temperatur weitere 60 Minuten bei 60 °C gehalten und ein NCO-Equivalentgewicht von 1.120 g/eq bestimmt (bezogen auf Festanteile). Nach Anlösung in 7.737 Teilen Methylisobutylketon und Zugabe von 24 Teilen Dibutylzinndilaurat wurden 867 Teile geschmolzenes Trimethylolpropan so zugegeben, daß eine Produkttemperatur von 100 °C nicht überschritten wurde. Nach Zugabeende ließ man weitere 60 Minuten nachreagieren. Man kühlte auf 65 °C ab und verdünnte gleichzeitig mit 963 Teilen n-Butanol und 300 Teilen Methylisobutylketon. Der Feststoffgehalt lag bei 70,1 % (1 Stunde bei 130 °C).

### Herstellbeispiel 2

### Herstellung eines Vorprodukts der Aminkomponente für ein Elektrotauchlack-Bindemittel.

Aus einer 70%-igen Lösung von Diethylentriamin in Methylisobutylketon wurde bei 110 bis 140 °C das Reaktionswasser entfernt. Anschließend wurde mit Methylisobutylketon verdünnt, bis die Lösung ein Aminequivalentgewicht von 131 g/eq aufweist.

### Herstellbeispiel 3

### Herstellung der wäßrigen Elektrotauchlack-Bindemittel-Dispersion D1

In einem Reaktor, ausgerüstet mit Rührer, Rückflußkühler, Innenthermometer und Inertgaseinleitung, wurden 6.150 Teile Epoxidharz auf Basis von Bisphenol A mit einem Epoxy-Äquivalentgewicht (EEW) von 188 g/eq zusammen mit 1.400 Teilen Bisphenol A, 355 Teilen Dodecylphenol, 470 Teilen p-Kresol und 441 Teilen Xylol unter Stickstoffatomsphäre auf 125 °C aufgeheizt und 10 Minuten gerührt. Anschließend heizte man auf 130 °C und gab 23 Teile N,N-Dimethylbenzylamin zu. Bei dieser Temperatur wurde der Reaktionsansatz gehalten, bis das EEW einen Wert von 880 g/eq erreicht hatte.

Man gab nun eine Mischung aus 7.097 Teilen des Vernetzungsmittels gemäß Herstellbeispiel 1 und 90 Teilen des Additivs K 2000 (Polyether der Firma Byk Chemie) hinzu und hielt die resultierenden Mischung bei 100 °C. Eine halbe Stunde nach Vernetzerzugabe wurden 211 Teile Butylglykol und 1.210 Teile Isobutanol zugesetzt. Unmittelbar anschließend wurde eine Mischung aus 467 Teilen des Vorprodukts gemäß Herstellbeispiel 2 und 520 Teilen Methylethanolamin in den Reaktor gegeben und der Ansatz bei 100 °C temperiert. Nach einer weiteren halben Stunde erhöhte man die Temperatur auf 105 °C und gab 150 Teile N,N-Dimethylaminopropylamin zu.

75 Minuten nach Aminzugabe setzte man 903 Teile Plastilit^{R} 3060 (Propylenglykolverbindung der Firma BASF Aktiengesellschaft), verdünnte mit 522 Teilen Propylenglykolphenylether (Mischung aus 1-Phenoxy-2-propanol und 2-Phenoxy-1-propanol der Firma BASF Aktiengesellschaft) und kühlte auf 95 °C ab.

Nach 10 Minuten wurden 14.821 Teile des Reaktionsgemischs in ein Dispergiergefäß überführt. Dort gab man unter Rühren 474 Teile Milchsäure (88 %-ig in Wasser), gelöst in 7.061 Teilen Wasser, zu. Anschließend wurde der Ansatz während 20 Minuten homogenisiert, bevor mit weiteren 12.600 Teilen Wasser in kleinen Portionen weiter verdünnt wurde.

Durch Destillation im Vakuum wurden die flüchtigen Lösemittel entfernt und anschließend mengengleich durch Wasser ersetzt.

Die Dispersion D1 besaß die folgenden Kennzahlen:

| | |
|---|---|
| Feststoffgehalt: | 33,8 Gew.-% (1 Stunde bei 130 °C) |
| | 29,9 Gew.-% (0,5 Stunden bei 180 °C) |
| Basengehalt: | 0,71 Milliequivalente/g Festkörper |
| Säuregehalt: | 0,36 Milliequivalente/g Festkörper |
| pH: | 6,3 |
| Teilchengröße: | 113 nm (ermittelt durch die Photonen-Korrelations-Spektroskopie) |

### Herstellbeispiel 4

### Herstellung der wäßrigen Elektrotauchlack-Bindemittel-Dispersion D2

Zur Herstellung der Bindemitteldispersion D2 wurde das Herstellbeispiel 3 wiederholt, nur daß unmittelbar nach der Verdünnung mit Propylenglykolphenylether 378 Teile Bismut-2-ethylhexanoat (K-KAT 348 der Firma King Industries) unter Rühren zugemischt wurden. Nach dem Abkühlen wurden analog zum Herstellbeispiel 3 14.821 Teile des Reaktionsgemischs in Wasser dispergiert.

Die Dispersion D2 besaß die folgenden Kennzahlen:

| | |
|---|---|
| Feststoffgehalt: | 33,9 Gew.-% (1 Stunde bei 130 °C) |
| | 30,1 Gew.-% (0,5 Stunden bei 180 °C) |
| Basengehalt: | 0,74 Milliequivalente/g Festkörper |
| Säuregehalt: | 0,48 Milliequivalente/g Festkörper |
| pH: | 5,9 |
| Teilchengröße: | 189 nm (ermittelt durch die Photonen-Korrelations-Spektroskopie) |

### Herstellbeispiel 5

### Herstellung einer Epoxid-Aminaddukt-Lösung

Gemäß dem europäischen Patent EP 0 505 445 B1, Beispiel 1.3, wurde eine organisch-wäßrige Lösung eines Epoxid-Aminaddukts hergestellt, indem man in einer ersten Stufe 2.598 Teile Bisphenol-A-diglycidylether (EEW: 188 g/eq), 787 Teile Bisphenol-A, 603 Teile Dodecylphenol und 206 Teile Butylglykol in Gegenwart von 4 Teilen Triphenylphosphin bei 130 °C bis zu einem EEW von 865 g/eq reagieren ließ. Während des Abkühlens wurde die Reaktionsmischung mit 849 Teilen Butylglykol und 1.534 Teilen D.E.R. 732 (Polypropylenglykoldiglycidylether der Fa. DOW Chemical) verdünnt und bei 90 °C mit 266 Teilen 2,2'-Aminoethoxyethanol und 212 Teilen N,N-Dimethylaminopropylamin weiterreagieren gelassen. Nach 2 Stunden war die Viskosität der Harzlösung konstant [5,3 dPas; 40 %-ig in Solvenon^{R} PM (Methoxypropanol der Firma BASF Aktiengesellschaft); Platte-Kegel-Viskosimeter bei 23 °C]. Man verdünnte mit 1.512 Teilen Butylglykol und teilneutralisierte die Basengruppen mit 201 Teilen Eisessig, verdünnte weiter mit 1.228 Teilen entionisiertem Wasser und trug die Lösung aus. Man erhielt eine 60%-ige wäßrig-organische Harzlösung, deren 10%-ige Verdünnung einen pH von 6,0 aufwies.

Die Epoxid-Aminaddukt-Lösung wurde im folgenden zur Herstellung einer erfingdungsgemäß zu verwendenden Dispersion eingesetzt.

### Herstellbeispiel 6

### Die Herstellung einer erfindungsgemäß zu verwendenden Dispersion D3

Wie in der internationalen Patentanmeldung WO 98/07794, Beispiel 4.3, beschrieben, wurden in einem Edelstahlreaktionsgefäß 18.873 Teile der Epoxid-Aminaddukt-Lösung gemäß Herstellbeispiel 5 sowie 37.532 Teile deionisiertes Wasser und 5.000 Teile Ethanol vorgelegt. Der Reaktorinhalt wurde auf 80 °C erhitzt, und es wurden 383 Teile Initiator tert.-Butyl-2-ethylperhexanoat zugegeben. Innerhalb einer Stunde wurden 38.411 Teile Styrol zugegeben. Dabei wurde die Temperatur bei 90 °C gehalten. Vier Stunden nach Styrolzugabe war die Reaktion beendet.

Die Dispersion D3 wies die folgenden Kennzahlen auf:
- Festkörper:: 50 Gew.-% (1 Stunde bei 130° C)
- Viskosität:: 280 mPas

### Herstellbeispiel 7

### Die Herstellung einer Pigmentpaste P1

Es wurden zunächst 277 Teile Wasser und 250 Teile der in Herstellbeispiel 5 beschriebenen Epoxid-Aminaddukt-Lösung vorgemischt. Dann wurden 5 Teile Ruß, 67 Teile Extender ASP 200, 373 Teile Titandioxid (TI-PURE R900 der Firma DuPont) und 25 Teile Vernetzungskatalysator (DBTO; Dibutylzinnoxid) zugefügt. Die resultierende Mischung wurde 30 Minuten lang unter einem schnellaufenden Dissolverrührwerk homogenisiert. Anschließend wurde die Mischung in einer Labor-Rührwerksmühle während 1 bis 1,5 Stunden bis zu einer Hegman-Feinheit von 12 dispergiert und mit weiterem Wasser auf die gewünschte Verarbeitungsviskosität eingestellt.

### Beispiele 1 bis 4 und Vergleichsversuche V1 und V2

### Herstellung erfindungsgemäß zu verwendender (Beispiele 1 bis 4) und nicht erfindungsgemäß zu verwendender (Vergleichsversuche V1 und V2) kathodisch abscheidbarer Elektrotauchlacke (KTL)

Aus den Elektrotauchlack-Bindemittel-Dispersionen D1 und D2 gemäß den Herstellbeispielen 3 und 4, der erfindungsgemäß zu verwendenden Dispersion D3 gemäß Herstellbeispiel 6 und der Pigmentpaste P1 gemäß Herstellbeispiel 7 wurden die in der Tabelle 1 zusammengestellten KTL hergestellt. Im Falle der pigmentierten KTL des Beispiels 1 und des Vergleichsversuchs V1 beträgt der Festkörpergehalt etwa 20 Gew.-%. Im Falle der nicht pigmentierten KTL der Beispiele 2 bis 4 und des Vergleichsversuchs V2 beträgt der Festkörpergehalt etwa 15 Gew.-%.

**Tabelle 1: Die stoffliche Zusammensetzung in Gewichtsteilen der erfindungsgemäß zu verwendenden (Beispiele 1 bis 4) und der nicht erfindungsgemäß zu verwendenden (Vergleichsversuche V1 und V2) KTL**

| **Bestandteile** | **Beispiele:** | | | | | |
|---|---|---|---|---|---|---|
| | **Vergleichsversuche:** | | | | | |
| | **1** | **2** | **3** | **4** | **V1** | **V2** |
| D1 | 2.332 | - | - | - | 2.771 | - |
| D2 | - | 2.118 | 1.994 | 1.869 | - | 2.492 |
| D3 | 257 | 225 | 300 | 375 | - | - |
| P1 | 313 | **-** | - | **-** | 313 | - |
| Wasser | 2.098 | 2.657 | 2.706 | 2.756 | 1.916 | 2.098 |

### Beispiele 5 bis 8 und Vergleichsversuche V4 bis V11

### Herstellung von Mehrschichtlackierungen in erfindungsgemäßer (Beispiele 5 bis 8) und nicht erfindungsgemäßer (Vergleichsversuche V4 bis V11) Verfahrensweise

Die Zusammenstellung 1 gibt einen Überblick darüber, welche KTL bei den Beispielen 5 bis 8 und den Vergleichsversuche V4 bis V11 angewandt wurden.

### Zusammenstellung 1:

| **Beispiel** | **Vergleichsversuch** | **KTL** | |
|---|---|---|---|
| | | **Beispiel oder Vergleichsversuch:** | |
| 5 | V6 | 1 | - |
| 6 | V9 | 2 | - |
| 7 | V10 | 3 | - |
| 8 | V11 | 4 | - |
| - | V4, V5 | - | V1 |
| - | V7, V8 | - | V2 |

Die KTL wurden nach einer Badalterung von 24 Stunden auf nicht passivierend gespülten Stahltafeln (BO 26 W 42 OC der Firma Chemetall) abgeschieden. Die Abscheidespannung und -temperatur (300 bis 330 Volt, Badtemperatur 30 °C) wurden dabei so gewählt, daß nach dem Einbrennen während 15 Minuten bei 185 °C Objekttemperatur Elektrotauchlackierungen einer Schichtdicke von 17 bis 20 µm resultierten.

In einer Versuchsserie A (= Vergleichsversuche V4, V6,V7, V9, V10 und V11) wurden die KTL unter den genannten Bedingungen nach ihrer Applikation eingebrannt. Hiernach wurden die Elektrotauchlackierungen mit einem Serienwasserfüller (FU80-7211 der Firma BASF Coatings AG) überschichtet. Die Füllerschicht wurde unter üblichen und bekannten Bedingungen bei 155 °C eingebrannt, so daß Füllerlackierungen einer Schichtdicke von 30 bis 35µm resultierten. Die Füllerlackierungen wurden des weiteren nach dem Naß-in-naß-Verfahren mit einem handelsüblichen Wasserbasislack der Firma BASF Coatings AG und einem handelsüblichen Klarlack der Firma BASF Coatings AG beschichtet, so daß nach dem Einbrennen Wasserbasislackierungen einer Schichtdicke von 20 bis 25 µm und Klarlackierungen einer Schichtdicke von 40 bis 50 µm resultierten.

In einer Versuchsserie B (= Beispiele 5, 6, 7 und 8 sowie Vergleichsversuche V5 und V8) wurden die KTL nicht eingebrannt, sondern während 10 Minuten bei 90 °C vorgetrocknet. Auf die getrockneten KTL wurde der vorstehend genannte Serienwasserfüller FU80-7211 appliziert, wonach die beiden Schichten gemeinsam während 15 Minuten bei 185°C Objekttemperatur eingebrannt wurden. Hiernach wurden sie, wie vorstehend beschrieben, nach dem Naß-in-naß-Verfahren mit einer Wasserbasislackierung und einer Klarlackierung überschichtet.

Die so erhaltenen Mehrschichtlackierungen der Versuchsserien A und B wurden der in der Fachwelt bekannten VDA-Steinschlag-Prüfung und der in der Fachwelt bekannten MB-Kugelschluß-Prüfung unterworfen. Die Ergebnisse fmden sich in der Tabelle 2.

Die Versuchsergebnisse zeigen, daß bei den Mehrschichtlackierungen, deren KTL keine erfindungsgemäß zu verwendende Dispersion D3 enthielten, die Steinschlagfestigkeit und Korrosionsschutzwirkung im wesentlichen unabhängig war von der Art der Herstellung (vgl. Vergleichsversuche V4 und V5 sowie V7 und V8). Dagegen wurden bei den Mehrschichtlackierungen, deren KTL die erfindungsgemäß zu verwendende Dispersion D3 enthielten, in der Tendenz sogar eine bessere Steinschlagbeständigkeit und Korrosionsschutzwirkung bei der Anwendung des erfindungsgemäßen Verfahrens erhalten [vgl. Beispiel 5 mit Vergleichsversuch V6 (pigmentierte KTL) sowie Beispiel 6 und Vergleichsversuch V9, Beispiel 7 und Vergleichsversuch V10, Beispiel 8 und Vergleichsversuch V11 (nicht pigmentierte KTL) festgestellt.

**Tabelle 2: Steinschlagbeständigkeit und Korrosionsschutzwirkung von Mehrschichtlackierungen, die in erfindungsgemäßer Verfahrensweise (Beispiele 5 bis 8) und in nicht erfindungsgemäßer Verfahrensweise (Vergleichsversuche V4 bis V11) hergestellt worden sind**

| | **Beispiele:** | | | | **Vergleichsversuche:** | | | | | | | |
|---|---|---|---|---|---|---|---|---|---|---|---|---|
| | **5** | **6** | **7** | **8** | **V4** | **V5** | **V6** | **V7** | **V8** | **V9** | **V10** | |
| | **V11** | | | | | | | | | | | |
| **Serie** | **B** | **B** | **B** | **B** | **A** | **B** | **A** | **A** | **B** | **A** | **A** | **A** |
| **VDA** ^{a)} | 2 | 2 | 2,5 | 3 | 2 | 2 | 2 | 2 | 2 | 2 | 2 | 2 |
| **MB ^{b)} Abpl. ^{c)}** | 6 | 4 | 6 | 7 | 7 | 9 | 8 | 7 | 10 | 7 | 8 | 6 |
| **Rgrd. ^{d)}** | 1 | 4 | 1 | 1 | 5 | 5 | 3 | 5 | 5 | 2 | 2 | 1 |

| | | | | | | | | | | | | |
|---|---|---|---|---|---|---|---|---|---|---|---|---|
| a) = VDA-Steinschlagprüfung; beste Note = 0, schlechteste Note = 5; b) = MB-Kugelschuß- Prüfung; MB-Spezifikation LPV 5200.40701; c) Abpl. = Abplatzungen in mm²; d) Rgrd. = Rostgrad; beste Note = 0, schlechteste Note = 5; | | | | | | | | | | | | |

### Beispiele 9 bis 12 und Vergleichsversuche V12 und V13

### Herstellung von Mehrschichtlackierungen in erfindungsgemäßer (Beispiele 9 bis 12) und nicht erfindungsgemäßer (Vergleichsversuche V12 und V13) Verfahrensweise

Die Zusammenstellung 2 gibt einen Überblick darüber, welche KTL bei den Beispielen 9 bis 12 und den Vergleichsversuche V12 und V13 angewandt wurden.

### Zusammenstellung 2:

| **Beispiel** | **Vergleichsversuch** | **KTL** | |
|---|---|---|---|
| | | **Beispiel oder Vergleichsversuch:** | |
| 9 | - | 1 | - |
| 10 | - | 2 | - |
| 11 | - | 3 | - |
| 12 | - | 4 | - |
| - | V12 | - | V1 |
| - | V13 | - | V2 |

Die vorstehend beschriebenen KTL wurden nach einer Badalterung von 24 Stunden auf nicht passivierend gespülten Stahltafeln (BO 26 W 42 OC der Firma Chemetall) abgeschieden. Die Abscheidespannung und -temperatur (300 bis 330 Volt, Badtemperatur 30 °C) wurden dabei so gewählt, daß nach dem Einbrennen während 15 Minuten bei 185 °C Objekttemperatur Elektrotauchlackierungen einer Schichtdicke von 17 bis 20 µm resultierten.

In der Versuchsserie C wurden die Elektrotauchlackschichten zum einen nach dem Naß-in-naß-Verfahren und zum anderen nach dem Einbrennen (Standardverfahren) mit dem handelsüblichen Wasserserienfüller (FU80-7211 der Firma BASF Coatings AG) überschichtet. In allen Fällen resultierten Füllerlackierungen einer Schichtdicke von 30 bis 35 µm. Es wurden Oberflächenprofilmessungen (Pa-Wert in µm) mit einem Perthometer S8P der Firma Mahr durchgeführt. Der Vergleich zwischen dem Einfluß des erfindungsgemäß zu verwendenden Naß-in-naß-Verfahrens und dem des Standardverfahrens auf die Oberflächenglätte wurde anhand der Differenzbeträge zwischen den Ra-Werten des Standardverfahrens und denen des Naß-in-naß-Verfahrens geführt. Dies schließt die Schwankung der Einzelwerte aufgrund von Einflüssen der Überlackierung aus, da jede KTL separat überlackiert wurde.

Die Ergebnisse finden sich in der Tabelle 3.

In einer Versuchsserie D wurden die Elektrotauchlackschichten zum einen nach dem Naß-in-naß-Verfahren und zum anderen nach dem Einbrennen (Standardverfahren) mit einem Wasserfüller (Ecoprime® FU 30-7210 derFirma BASF Coatings AG) überschichtet. Hierauf wurden nach dem Naß-in-naß-Verfahren ein handelsüblicher Wasserbasislack (Ecostar®) und ein handelsüblicher Klarlack (beide von Firma BASF Coatings AG appliziert und eingebrannt. Hierdurch resultierten Mehrschichtlackierungen des Aufbaus:
- Elektrotauchlackierung 17 bis 20 µm
- Funktionsschicht 12 bis 17 µm
- Basislackierung 20 bis 25 µm
- Klarlackierung 40 bis 50 µm.

Die Oberflächenglätte wurde, wie vorstehend beschrieben, gemessen und ausgewertet. Die Ergebnisse finden sich ebenfalls in der Tabelle 3.

Die in der Tabelle 3 zusammengestellten Ergebnisse belegen folgendes:
1. Naß-in-naß-Verfahren führen grundsätzlich zu einer besseren Oberflächenglätte als das Standardverfahren.
2. KTL, die die erfindungsgemäßen Dispersionen D3 enthalten, liefern sowohl im Standardverfahren als auch im Naß-in-naß-Verfahren glattere Oberflächen als KTL ohne Dispersion D3.
3. KTL, die erfindungsgemäßen Dispersionen D3 enthalten und nach dem Naß-in-naß-Verfahren verarbeitet werden, liefern die glattesten Oberflächen.

**Tabelle 3: Die Oberflächenglätte der Mehrschichtlackierungen gemäß den Beispielen 9 bis 10 und den Vergleichsversuchen V12 und V13**

| | **Beispiele:** | | | | | |
|---|---|---|---|---|---|---|
| | **Vergleichsversuche:** | | | | | |
| | **9** | **10** | **11** | **12** | **V12** | **V13** |
| **Serie:** | C/D | C/D | C/D | C/D | C/D | C/D |
| **Pa-Differenz:** | 0,12/0,01 | 0,13/0,05 | 0,08/0,04 | 0,07/0,01 | 0,25/0,1 | 0,28/0,14 |

## Patentansprüche

1. Verfahren zur Herstellung von Mehrschichtlackierungen auf elektrisch leitfähigen Substraten durch ein Naß-in-naß-Verfahren, bei dem man
(I) auf dem elektrisch leitfähigen Substrat einen kathodisch abscheidbaren Elektrotauchlack abscheidet,
(II) auf die resultierende Elektrotauchlackschicht mindestens einen thermisch oder thermisch und mit aktinischer Strahlung härtbaren Beschichtungsstoff appliziert, wonach man
(III) die Elektrotauchlackschicht und die Schicht aus dem Beschichtungsstoff oder die beiden genannten Schichten und noch mindestens eine darüberliegende weitere Schicht aus einem Beschichtungsstoff gemeinsam härtet,
**dadurch gekennzeichnet, daß** der kathodisch abscheidbare Elektrotauchlack eine wäßrige Dispersion enthält, herstellbar, indem
(1) ein ethylenisch ungesättigtes Monomer oder eine Mischung aus ethylenisch ungesättigten Monomeren in
(2) einer wäßrigen Lösung eines wenigstens teilweise protonierten Epoxid-Aminaddukts polymerisiert wird, wobei
(3) das Epoxid-Aminaddukt erhältlich ist, indem
(A) mindestens ein Glydicylether eines Polyphenols, der im statistischen Mittel mindestens eine Epoxidgruppe im Molekül enthält,
(B) mindestens ein Polygycidylether eines Polyols, der im statistischen Mittel mehr als 1,0 Epoxidgruppen im Molekül enthält, und
(C) mindestens eine Verbindung, die eine primäre Aminogruppe im Molekül enthält,
zu dem Epoxid-Aminaddukt umgesetzt werden, wobei die Komponenten (A) und (B) in einem Äquivalentverhältnis von 1,0 : 0,5 bis 1,0 : 8,0 eingesetzt werden und auf ein Äquivalent Epoxidgruppen aus (A) und (B) 0,3 bis 0,7 Mol der Komponente (C) eingesetzt werden.

2. Verfahren nach Anspruch 1, **dadurch gekennzeichnet, daß** die wäßrige Dispersion erhältlich ist, indem das ethylenisch ungesättigte Monomer bzw. die Mischung aus ethylenisch ungesättigten Monomeren und das wenigstens teilweise protonierte Epoxid-Aminaddukt in einem Gewichtsverhältnis von 9,0:1,0 bis 0,1:1,0 eingesetzt werden.

3. Verfahren nach Anspruch 1 oder 2, **dadurch gekennzeichnet, daß** die wäßrige Dispersion erhältlich ist, indem als ethylenisch ungesättigtes Monomer Styrol eingesetzt wird.

4. Verfahren nach Anspruch 1 oder 2, **dadurch gekennzeichnet, daß** die wäßrige Dispersion erhältlich ist, indem als Mischung aus ethylenisch ungesättigten Monomeren eine Mischung aus Styrol und mindestens einem weiteren, mit Styrol copolymerisierbaren ungesättigten Monomer eingesetzt wird.

5. Verfahren nach Anspruch 4, **dadurch gekennzeichnet, daß** die Mischung aus ethylenisch ungesättigten Monomeren mindestens 70 Gew.-% Styrol enthält.

6. Verfahren nach einem der Ansprüche 1 bis 5, **dadurch gekennzeichnet, daß** es sich bei dem Beschichtungsstoff um einen pigmentierten oder nicht pigmentierten Beschichtungsstoff handelt.

7. Verfahren nach einem der Ansprüche 1 bis 6, **dadurch gekennzeichnet, daß** der Beschichtungsstoff selbstvernetzend ist.

8. Verfahren nach einem der Ansprüche 1 bis 7, **dadurch gekennzeichnet, daß** der Beschichtungsstoff fremdvernetzend ist.

9. Verfahren nach Anspruch 8, **dadurch gekennzeichnet, daß** der Beschichtungsstoff ein Einkomponentensystem oder ein Zwei- oder Mehrkomponentensystemen ist.

10. Verfahren nach einem der Ansprüche 1 bis 9, **dadurch gekennzeichnet, daß** der Beschichtungsstoff im wesentlichen frei von Wasser und/oder organischen Lösemitteln und pulverförmig oder flüssig (100%-System) ist.

11. Verfahren nach einem der Ansprüche 1 bis 9, **dadurch gekennzeichnet, daß** es sich um einen auf Wasser basierenden Beschichtungsstoff handelt.

12. Verfahren nach Anspruch 11, **dadurch gekennzeichnet, daß** es sich um eine wäßrige Pulverlackdispersion handelt.

13. Verfahren nach einem der Ansprüche 1 bis 9, **dadurch gekennzeichnet, daß** es sich um einen konventionellen, d. h. um einen auf organischen Lösemitteln basierenden Beschichtungsstoff handelt.

14. Verfahren nach einem der Ansprüche 1 bis 13, **dadurch gekennzeichnet, daß** man die Elektrotauchlackschicht vor der Applikation des Beschichtungsstoffs trocknet, ohne sie zu vernetzen.

15. Verfahren nach einem der Ansprüche 1 bis 14, **dadurch gekennzeichnet, daß** es sich bei den elektrisch leitfähigen Substraten um Karosserien von Kraftfahrzeugen oder Teilen hiervon, Möbel und industrielle Bauteile, inklusive Coils und Container, handelt.

## Claims

1. Process for producing multicoat paint systems on electroconductive substrates by a wet-on-wet technique, in which
(I) a cathodically depositable electrocoat material is deposited on the electroconductive substrate,
(II) at least one coating material curable thermally or both thermally and with actinic radiation is applied to the resultant electrocoat film, and then
(III)the electrocoat film and the film of the coating material, or the two said films and at least one further, overlying film of a coating material, are jointly cured,
**characterized in that** the cathodically depositable electrocoat material comprises an aqueous dispersion preparable by
(1) polymerizing an ethylenically unsaturated monomer or a mixture of ethylenically unsaturated monomers in
(2) an aqueous solution of an at least partly protonated epoxy-amine adduct,
(3) the epoxy-amine adduct being obtainable by reacting
(A) at least one glycidyl ether of a polyphenol, containing on average at least one epoxide group in the molecule,
(B) at least one polyglycidyl ether of a polyol, containing on average more than 1.0 epoxide group in the molecule, and
(C) at least one compound containing a primary amino group in the molecule,
to give the epoxy-amine adduct, components (A) and (B) being used in an equivalents ratio of from 1.0:0.5 to 1.0:8.0, and using from 0.3 to 0.7 mol of component (C) per equivalent of epoxide groups of (A) and (B).

2. Process according to Claim 1, **characterized in that** the aqueous dispersion is obtainable by using the ethylenically unsaturated monomer or mixture of ethylenically unsaturated monomers and the at least partly protonated epoxy-amine adduct in a weight ratio of from 9.0:1.0 to 0.1:1.0.

3. Process according to Claim 1 or 2, **characterized in that** the aqueous dispersion is obtainable using styrene as the ethylenically unsaturated monomer.

4. Process according to Claim 1 or 2, **characterized in that** the aqueous dispersion is obtainable using a mixture of styrene and at least one further unsaturated monomer copolymerizable with styrene, as the mixture of ethylenically unsaturated monomers.

5. Process according to Claim 4, **characterized in that** the mixture of ethylenically unsaturated monomers contains at least 70% by weight styrene.

6. Process according to any of Claims 1 to 5, **characterized in that** the coating material is a pigmented or unpigmented coating material.

7. Process according to any of Claims 1 to 6, **characterized in that** the coating material is self-crosslinking.

8. Process according to any of Claims 1 to 7, **characterized in that** the coating material is externally crosslinking.

9. Process according to Claim 8, **characterized in that** the coating material is a one-component system or a two-component or multicomponent system.

10. Process according to any of Claims 1 to 9, **characterized in that** the coating material is substantially free from water and/or organic solvents and is pulverulent or liquid (100% system).

11. Process according to any of Claims 1 to 9, **characterized in that** the coating material is a water-based coating material.

12. Process according to Claim 11, **characterized in that** the coating material is an aqueous powder coating dispersion.

13. Process according to any of Claims 1 to 9, **characterized in that** the coating material is a conventional coating material, i.e., a coating material based on organic solvents.

14. Process according to any of Claims 1 to 13, **characterized in that** prior to the application of the coating material the electrocoat film is dried without being crosslinked.

15. Process according to any of Claims 1 to 14, **characterized in that** the electroconductive substrates are bodies of motor vehicles or parts thereof, furniture and industrial components, including coils and containers.

## Revendications

1. Procédé pour la production de revêtements de peinture multicouches sur des subjectiles conducteurs de l'électricité, par un procédé humide-sur-humide, dans lequel
(I) on dépose sur le subjectile conducteur de l'électricité une peinture électrophorétique apte à être déposée par dépôt cathodique,
(II) on applique sur la couche de peinture électrophorétique résultante au moins une matière de revêtement durcissable thermiquement et par un rayonnement actinique, puis
(III) on fait durcir ensemble la couche de peinture électrophorétique et la couche de la matière de revêtement ou les deux couches nommées et encore au moins une autre couche sus-jacente d'une matière de revêtement,
**caractérisé en ce que** la peinture électrophorétique apte à être déposée par dépôt cathodique contient une dispersion aqueuse qui peut être préparée par polymérisation
(1) d'un monomère à insaturation éthylénique ou d'un mélange de monomères à insaturation éthylénique dans
(2) une solution aqueuse d'un adduit amine-époxyde au moins partiellement protoné,
(3) l'adduit amine-époxyde pouvant être obtenu par mise en réaction
(A) d'au moins un éther glycidylique d'un polyphénol, qui contient en moyenne statistique au moins un groupe époxy dans la molécule,
(B) d'au moins un éther polyglycidylique d'un polyol, qui contient en moyenne statistique plus de 1,0 groupe époxy dans la molécule, et
(C) d'au moins un composé qui contient un groupe amino primaire dans la molécule,
pour aboutir à l'adduit amine-époxyde, en utilisant les composants (A) et (B) en un rapport d'équivalents de 1,0 : 0,5 à 1,0 : 8,0 et, pour un équivalent de groupes époxyde de (A) et (B), 0,3 à 0,7 mole du composant (C).

2. Procédé selon la revendication 1, **caractérisé en ce que** la dispersion aqueuse peut être obtenue en utilisant le monomère à insaturation éthylénique ou le mélange de monomères à insaturation éthylénique et l'adduit amine-époxyde au moins partiellement protoné en un rapport pondéral de 9,0:1,0 à 0,1:1,0.

3. Procédé selon la revendication 1 ou 2, **caractérisé en ce que** la dispersion aqueuse peut être obtenue en utilisant du styrène en tant que monomère à insaturation éthylénique.

4. Procédé selon la revendication 1 ou 2, **caractérisé en ce que** la dispersion aqueuse peut être obtenue en utilisant comme mélange de monomères à insaturation éthylénique un mélange de styrène et d'au moins un autre monomère insaturé copolymérisable avec le styrène.

5. Procédé selon la revendication 4, **caractérisé en ce que** le mélange de monomères à insaturation éthylénique contient au moins 70 % en poids de styrène.

6. Procédé selon l'une quelconque des revendications 1 à 5, **caractérisé en ce que** la matière de revêtement consiste en une matière de revêtement pigmentée ou non pigmentée.

7. Procédé selon l'une quelconque des revendications 1 à 6, **caractérisé en ce que** la matière de revêtement est autoréticulable.

8. Procédé selon l'une quelconque des revendications 1 à 7, **caractérisé en ce que** la matière de revêtement est réticulable à l'aide d'un agent de réticulation.

9. Procédé selon la revendication 8, **caractérisé en ce que** la matière de revêtement est un système monocomposant ou un système bi- ou multicomposant.

10. Procédé selon l'une quelconque des revendications 1 à 9, **caractérisé en ce que** la matière de revêtement est pratiquement exempte d'eau et/ou de solvants organiques et pulvérulente ou liquide (système à 100 %).

11. Procédé selon l'une quelconque des revendications 1 à 9, **caractérisé en ce qu'**il s'agit d'une matière de revêtement à base d'eau.

12. Procédé selon la revendication 11, **caractérisé en ce qu'**il s'agit d'une dispersion aqueuse de peinture en poudre.

13. Procédé selon l'une quelconque des revendications 1 à 9, **caractérisé en ce qu'**il s'agit d'une matière de revêtement traditionnelle, c'est-à-dire d'une matière de revêtement à base de solvants organiques.

14. Procédé selon l'une quelconque des revendications 1 à 13, **caractérisé en ce qu'**avant l'application de la matière de revêtement on sèche la couche de peinture électrophorétique ou on la fait réticuler.

15. Procédé selon l'une quelconque des revendications 1 à 14, **caractérisé en ce que** pour ce qui est des subjectiles conducteurs de l'électricité il s'agit de carrosseries de véhicules automobiles ou de parties de celles-ci, de meubles et de pièces de construction industrielles, y compris de rubans continus et récipients.
